# EUROPEAN PATENT APPLICATION

(11) **EP 0 622 165 A1**
(43) Date of publication of application: **02.11.1994**
(21) Application number: 94302974.4
(22) Date of filing: 25.04.1994
(51) Int. Cl.: B28D 1/12, B23D 61/14

(54) **Saw blade tooth**

(30) Priority: 26.04.1993 DE 4314004
(71) Applicant: Black & Decker Inc., Newark Delaware 19711 (US)
(72) Inventor: Herting, Rainer, D-5439 Langenhahn (DE)
(74) Representative: Lunt, George Francis Mark

(57) **Abstract**

A saw blade with saw teeth (15,16), in particular hard-metal saw teeth, which display a tooth tip (20,40) formed at the end facing away from the blade body (11) and a tooth root (25,45) lying opposite the tooth tip (20,40) has, on at least one outer side of at least some of the saw teeth, a projection (30) which displays a tip (33) directed to the side of the tooth tip (20) and lying at a distance from the latter. The distance between the tip of the projection and the tooth tip lies between 1/10 and 5/6 of the height of the saw tooth.

## Description

The invention relates to a saw blade with saw teeth provided along one edge of the blade body, in particular hard-metal saw teeth, which display a tooth tip formed at the end facing away from the blade body and a tooth root lying opposite the tooth tip.

Such saw blades, which are used for example as circular-saw blades for hand-held circular saws or circular-saw benches, but also as elongated saw blades pairwise in support plates of power saws, in which they are reciprocated in opposition in the direction of their longitudinal extension (EP 0 267 973 A1), are frequently also used to cut blocks from aerated cement or from so-called poroton, a porous brick material. Saw blades with saw teeth, optionally hardened, formed from the blade body material can be used for this purpose. However, saw blades in whose blade bodies saw teeth made from hard metal are used are preferably employed for this purpose. It should be pointed out that, in particular with hard-metal saw teeth but also with saw teeth which consist of the material of the blade body, the tooth tip need not be a tip coming to a sharp point in the geometric sense, but that a tooth tip is, in this case, a free end of the saw tooth thinned relative to the maximum width of the saw tooth.

If one attempts to saw aerated cement blocks with known saw blades, the result is a greasing of the aerated cement to be cut, and sawdust collects inside the kerf, which impairs the sawing process and can even lead to a jamming of the saw blade.

For the sawing of poroton blocks, which are much harder than aerated cement blocks, saw blades whose saw teeth protrude less far from the blade body are usually chosen. Problems arise with this sawing process from the fact that, because of the hardness and material-texture differences of the poroton blocks, the saw blade can jam, especially if elongated saw blades are used which are relatively flexible over their length.

The object of the invention is to improve a saw blade so that aerated cement blocks and/or poroton blocks can be better cut.

To achieve this object, a saw blade of the type mentioned initially is so designed according to the invention that at least some of the saw teeth are provided, on at least one outer side, with a projection which has a tip directed to the side of the tooth tip and lying at a distance from the latter, the distance of the tip from the tooth tip being between 1/10 and 5/6 of the height of the saw tooth between tooth root and tooth tip.

The effect of the projection, tapering in the direction of the tooth tip, projecting over the outside of the actual saw tooth is that, when sawing in aerated cement blocks or when sawing in poroton blocks, the kerf produced by the saw tooth is widened to the outside by the projection at a distance above the tooth tip in question, so that sufficient space is formed to receive sawdust and this is additionally removed from the kerf by the projections formed at saw teeth, so that the danger of the saw blade's sticking in the aerated cement block is greatly reduced. When working poroton blocks, the structure according to the invention clearly reduces the risk of jamming of the saw blade.

The tooth tip and the tip of the projection preferably lie in a common plane running perpendicular relative to the blade body at this point.

The flanks leading to the tip of the projection can form an acute angle, and they run rectilinearly in preferred mode.

The maximum width of the projection is advisably not greater than the maximum width of the saw tooth, so that the projection lies completely within the area of the side surface of the saw tooth.

In order to reduce even further the risk of the jamming of the saw blade, the outer surface of the projection can be inclined outwards in the direction of its tip, for example at an inclination angle of 5° to 10°. In this way, the zone of the projection lying nearest to the tooth tip creates the greatest kerf width, while the portion of the projection lying above is spaced from the boundary wall of the kerf, i.e. does not normally come into contact with this boundary wall, which could lead to a jamming of the saw blade.

Particularly if the saw teeth are made from hard-metal bodies inserted into the blade body, the projection is preferably designed in one piece with this hard-metal body. The projection can extend from its tip as far as the end of the hard-metal body forming the tooth root.

With a saw blade for a saw comprising two rectilinear saw blades reciprocatable in opposition in a support plate (e.g. EP 0 267 973 A1), the projections are provided at the outer side of the saw teeth facing away from the other saw blade, so that they can act on the side-walls of the kerf to be formed without impairing the opposed reciprocation of the neighbouring saw blades.

With such a saw-blade, some of the saw teeth, say every second saw tooth, are generally set outwards. The projections are preferably formed at the unset saw teeth.

The invention is explained in more detail below with reference to the figures.
- Figure 1: shows a saw blade in side view.
- Figure 2: shows, in section, two saw blades reciprocatable in opposition according to Fig. 1 set into a support plate.
- Figure 3: shows, in an enlarged partial representation, a part of the saw blade from Figure 1.
- Figure 4: shows a section along the line IV-IV from Figure 3.
- Figure 5: shows a section along the line V-V from Figure 3.

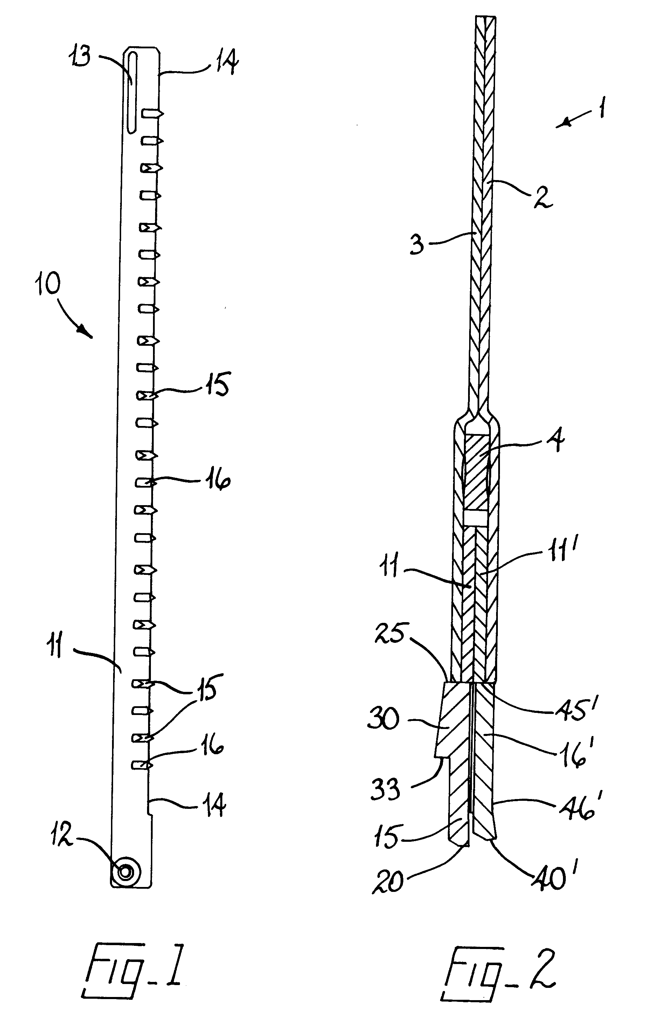

The saw blade 10 represented in Figure 1 has a structure such as is suitable for use in a saw according to EP 0 267 973 Al. Located at the rear end of the blade body 11 is an attachment 12 for connecting the saw blade 10 to a drive, while a slot 13 extending parallel to the bottom edge 14 of the blade body 11 is present in the front end-zone, support zones for the securing of the saw blade 10 inside the support plate 1 (Figure 2) of the saw engag- ing in said slot. The support plate 1 consists in the case of the known saw of two part-plates 2, 3 connected face-to-face to each other which part-plates are laterally offset by bending in the lower zone in order to form a receiving slot for two saw-blade bodies 11, 11'. A reinforcement strip 4 interposed above the inserted saw-blade bodies 11, 11' is connected to the part-plates 2, 3 by welding, to enforce the support plate 1. As is also to be seen from Figure 2, the upper end surfaces 25, 45, 45' form, in the zone of the tooth roots of the teeth 15, 16, 16' consisting of hard-metal bodies, the support shoulders for the two similarly formed saw blades for the engagement of the bottom edges of the part-plates 2, 3 of the support plate 1.

As represented in Figure 1, the saw blade 10 alternately contains saw teeth 15 and 16.

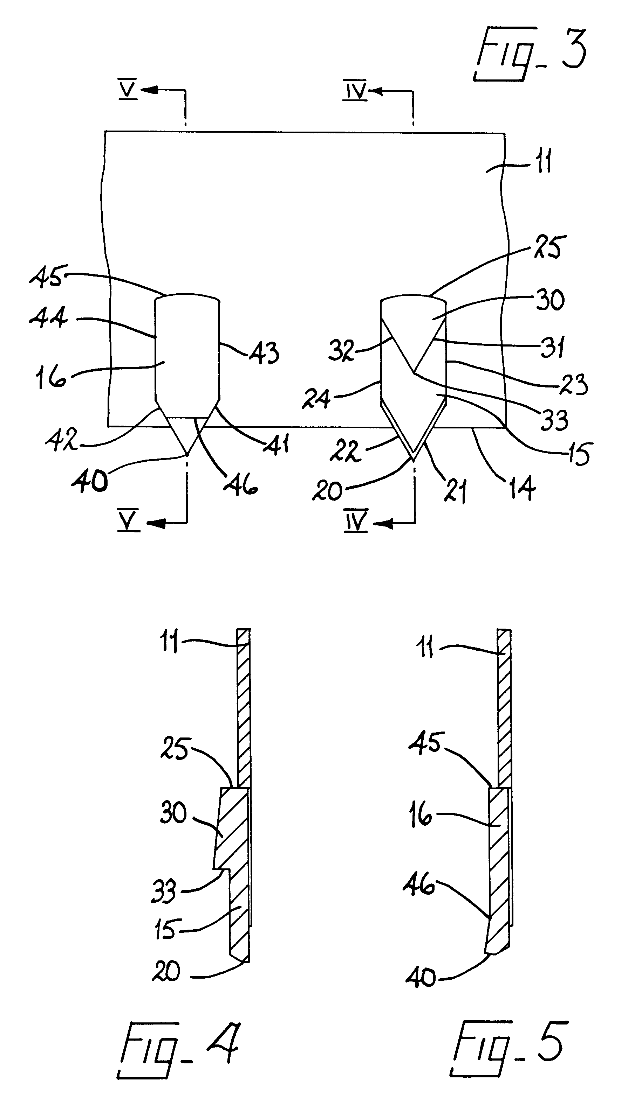

The saw teeth 16 are of conventional design. Their tooth tip 40 projects beyond the bottom edge 14 of the blade body 11, and the flanks 41, 42 defining the tooth tip, form an acute angle and extend to the side walls 43, 44 which end at the end-wall 45 in the zone of the tooth root (Figure 3).

As can be seen in Figure 2, the zone of the tooth tip 40 is thickened compared with the zone of the tooth root, and its outside extends inclined up to a line 46 at which the normal thickness size of the tooth body begins. In this way, the tooth 16 has a structure corresponding to a tooth set outwards, while the inner surface of the tooth 16 is plane and does not project beyond the inner surface of the blade body 11.

The tooth 15, on the other hand, is designed as an unset tooth, i.e. the section starting from the tooth tip 20 has side surfaces running parallel to the plane of the blade body 11 and displays a continuously uniform thickness. Present at a distance from the tooth tip 20 on the outside is a projection 30, starting from the tooth root end surface 25 and formed in one piece with the other saw tooth 15, which displays a tip 33 which lies in a plane which extends through the tooth tip 20 and perpendicular to the bottom edge 14 of the blade body 11. Flanks 31, 32 extend rectilinearly at an acute angle rearwards from the tip 33 and end at the outer side surfaces 23, 24 of the saw tooth 15. The distance between the tip 33 of the projection 30 and the tooth tip 20 lies between 1/10 and 5/6 of the dimension of the saw tooth 15 between the tip 20 and the tooth root end-surface 25, a range from 1/2 to 3/5 being preferred. In one embodiment, the height of the saw tooth 15 between tooth tip 20 and tooth root end-surface 25 was 13 mm and the distance between tooth tip 20 and tip 33 of the projection 30 was 7 mm, the saw tooth 15 projecting 3 mm beyond the bottom edge 14 of the blade body 11.

The outer surface of the projection 30 extends from the tip 33 to the rear end, i.e. to the tooth root end-surface 25 in a plane which is inclined at an angle of 5° to 10°, preferably 7° to the plane of the blade body 11, so that the projection 30 projects further outwards in the zone of the tip 33 than in the zone of the tooth root end-surface 25. The maximum thickness of the saw tooth 15 in the zone of the projection 30 can for example be roughly twice as great as the maximum thickness of the saw tooth 15 below the projection 30. In one embodiment, the saw tooth 15 had a maximum thickness of 1.6 mm below the projection 30, while the maximum thickness in the zone of the projection 30 was 3 mm.

The projection 30 incidentally juts out with the zone of its tip 33 somewhat to the outside beyond a plane which is laid against the outer points of the support plate 1 according to Figure 2, i.e. a plane which in Figure 2 lies at the upper left-hand edge of the partplate 3 and tangentially at the outer point in the zone of the offset of the part-plate 3 to the outside. In this way, an additional safeguard against the jamming of the support plate 1 in a created kerf is achieved, in particular when working the relatively hard poroton blocks.

## Claims

1. Saw blade with saw teeth (15, 16) provided along one edge (14) of the blade body (11), in particular hard-metal saw teeth, which display a tooth tip (20; 40) formed at the end facing away from the blade body (11) and a tooth root (25; 45) lying opposite the tooth tip (20; 40), **characterized in** **that** at least some of the saw teeth (15) are provided, on at least one outer side, with a projection (30) which has a tip (33) directed to the side of the tooth tip (20) and lying at a distance from the latter, the distance of the tip from the tooth tip (20) lying between 1/10 and 5/6, preferably 1/2 and 2/3 of the height of the saw tooth (15).

2. Saw blade according to claim 1, **characterized in that** the tooth tip (20) and the tip (33) of the projection lie in a common plane running perpendicular relative to the blade body (11) at this point.

3. Saw blade according to claim 1 or 2, **characterized in that** the flanks (31, 32) leading to the tip (33) of the projection (30) form an acute angle.

4. Saw blade according to claim 3, **characterized in** **that** the flanks (31, 32) extend rectilinearly.

5. Saw blade according to one of claims 1 to 4, **characterized** **in that** the maximum width of the projection (30) is not greater than the maximum width of the saw tooth (15).

6. Saw blade according to one of claims 1 to 5, **characterized** **in that** the outer surface of the projection (30) is inclined to the outside in the direction of its tip (33).

7. Saw blade according to claim 6, **characterized in that** the inclination angle of the outer surface of the projection (30) lies between 5° and 10°.

8. Saw blade according to one of claims 1 to 7 in which the saw teeth (15; 16) are made of hard-metal bodies inserted into the blade body (11), **characterized in that** the projection (30) is designed in one piece with the hard-metal body.

9. Saw blade according to claim 8, **characterized in that** the projection (30) extends from its tip (33) up to the end (25) of the hard-metal body forming the tooth root.

10. Saw blade according to one of claims 1 to 8 for a saw receiving two rectilinear saw blades reciprocatable in opposition in a support plate (1), **characterized in that** the pro-jections (30) are provided at the outer side of the saw teeth (15) facing away from the other saw blade.

11. Saw blade according to claim 10 in which some of the saw teeth are set outwards, **characterized in that** the projections (30) are formed at unset saw teeth (15).
